# EUROPÄISCHE PATENTSCHRIFT

(11) **EP 0 777 696 B1**
(45) Veröffentlichungstag und Bekanntmachung des Hinweises auf die Patenterteilung: **25.02.1998**
(21) Anmeldenummer: 95929870.4
(22) Anmeldetag: 16.08.1995
(51) Int. Cl.: C08G 73/06, C08G 69/10, C08G 73/10

(54) **VERFAHREN ZUR HERSTELLUNG VON SALZEN DER POLYASPARAGINSÄURE**
PROCESS FOR PREPARING POLYASPARTIC ACID SALTS
PROCEDE DE PREPARATION DE SELS D'ACIDE POLYASPARTIQUE

(30) Priorität: 27.08.1994 DE 4430520
(43) Veröffentlichungstag der Anmeldung: 11.06.1997
(73) Patentinhaber: BASF AKTIENGESELLSCHAFT, 67056 Ludwigshafen (DE)
(72) Erfinder: KRONER, Matthias, D-67304 Eisenberg (DE); SCHORNICK, Gunnar, D-67271 Neuleiningen (DE); STROTMANN, Uwe, D-67227 Frankenthal (DE); SCHWENDEMANN, Volker, D-67434 Neustadt (DE); MEYER, Thomas, D-67354 Römerberg (DE); LUDWIG, Alfons, D-37671 Höxter (DE)
(86) Internationale Anmeldenummer: EP9503224
(87) Internationale Veröffentlichungsnummer: WO9606879

(56) Entgegenhaltungen:
- WO-A-94/01486

## Beschreibung

Die Erfindung betrifft ein Verfahren zur Herstellung von Salzen der Polyasparaginsäure durch Behandlung von Polykondensaten der Asparaginsäure in wäßrigem Medium mit Basen, wobei man mehr als 1 Äquivalent einer Alkalimetall- und/oder Erdalkalimetallbase pro Mol der in den Polykondensaten enthaltenen Asparaginsäureimid-, Asparaginsäure- und/oder Asparaginsäureamideinheiten einsetzt, und ihre Verwendung in Wasch- und Reinigungsmitteln.

Bei der thermischen Polykondensation von Asparaginsäure bei Temperaturen oberhalb von 190°C entstehen Polykondensate, die im wesentlichen Asparaginsäureimideinheiten enthalten. Aus Journal of Medicinal Chemistry, Band 16, Seiten 893-897 (1973), ist bekannt, Asparaginsäure in Gegenwart von Phosphorsäure als Katalysator zu kondensieren. Aus der WO-A-93/24661 ist bekannt, daß Säuren, wie Phosphorsäure, phosphorige Säure, unterphosphorige Säure, Salzsäure oder Schwefelsäure sowie Natriumhydrogensulfat oder Kaliumhydrogensulfat die Polykondensation von Asparaginsäure bei Temperaturen oberhalb von etwa 150°C katalysieren. Die so erhältlichen Polykondensate enthalten überwiegend Asparaginsäureimideinheiten und können in Abhängigkeit von der Temperatur, bei der die Polykondensation durchgeführt wurde, Asparaginsäure-, Asparaginsäureamid- und Asparaginsäureimideinheiten enthalten. Aus den Polykondensaten der Asparaginsäure erhält man durch Behandlung mit Alkalimetallbasen, z.B. Natronlauge, die entsprechenden Salze von Polyasparaginsäuren.

Polyasparaginsäureimide können außerdem durch Anlagerung von Ammoniak an Maleinsäure und Kondensation hergestellt werden. Durch Hydrolyse und Neutralisation der Polyaspartimide mit Natronlauge entstehen die Natriumsalze von Polyasparaginsäuren. Pro Mol Aspartimideinheit in den Polykondensaten setzt man bis zu 1 mol Natronlauge ein. Verfahren dieser Art sind beispielsweise bekannt, aus WO-A-93/23452, WO-A-94/3526, WO-A-94/3527 und der DE-A-36 62 672. Aus den Veröffentlichungen WO-A-92/16462, WO-A-92/16463 und US-A-5 152 902 ist die Herstellung von Alkalimetallsalzen von Polyasparaginsäuren bekannt, wobei man das durch Kondensation von Asparaginsäure erhältliche Polyaspartimid in Wasser aufschlämmt und unter pH-Wertkontrolle Natronlauge zudosiert, so daß der pH-Wert 9,5 nicht überschreitet. In technischen Apparaten ist über die pH-Wert-Messung bei hohen Viskositäten und hohen Feststoffanteilen in den zu hydrolysierenden Mischungen nicht empfehlenswert, weil pH-Elektroden aufgrund der verzögerten Vermischung meistens keine genauen Werte anzeigen.

Aus der EP-A-0 581 452 ist bekannt, Natriumsalze von Asparaginsäure dadurch herzustellen, daß man zu einer auf 50-60°C erhitzten Aufschlämmung von Polyaspartimid in Wasser Natronlauge in einem solchen Maße zutropft, daß der pH-Wert der Reaktionsmischung nicht über 10 ansteigt. Nach Zugabe der Natronlauge wird das Reaktionsgemisch noch 1 Stunde bei 50-60°C gehalten. Man setzt etwa 83 % der für eine vollständige Neutralisation erforderlichen Menge an Natronlauge ein.

Die alkalische Hydrolyse und Neutralisation von Polysuccinimiden bzw. Polyasparaginsäuren ist ein stark exothermer Vorgang, der bei der Ausführung des Verfahrens in technischen Dimensionen sicher beherrscht werden muß, um einen störungsfreien Betrieb und eine gleichmäßige Produktqualität zu gewährleisten.

Der Erfindung liegt die Aufgabe zugrunde, ein Verfahren zur Herstellung von Salzen von Polykondensaten der Asparaginsäure zur Verfügung zu stellen, wobei man gegenüber dem Stand der Technik Produkte mit einer verbesserten biologischen Abbaubarkeit erhält.

Die Aufgabe wird erfindungsgemäß gelöst mit einem Verfahren zur Herstellung von Salzen der Polyasparaginsäure durch Behandlung von Polykondensaten der Asparaginsäure in wäßrigem Medium mit Basen, wenn man mehr als 1 Äquivalent einer Alkalimetall- und/oder einer Erdalkalimetallbase/Mol der in den Polykondensaten enthaltenen Asparaginsäureimid-, Asparaginsäure- und/oder Asparaginsäureamideinheiten einsetzt und die Kondensate teilweise hydrolytisch abbaut, wobei man die Basen innerhalb von 30 min bis 20 Stunden zu einer auf 40-140°C erhitzten wäßrigen Aufschlämmung von Polykondensaten der Asparaginsäure zufügt und die Reaktionsmischung ggf. noch nachreagieren läßt.

Die Polykondensate der Asparaginsäure können nach allen bekannten Verfahren hergestellt werden. In Abhängigkeit von der Herstellmethode besteht das Polykondensat aus Asparaginsäureeinheiten bzw. enthält Asparaginsäureeinheiten in überwiegender Menge oder das Kondensat enthält ausschließlich bzw. in überwiegender Menge Asparaginsäureimideinheiten. Daneben kann es auch Asparaginsäureamideinheiten enthalten. Asparaginsäure kann beispielsweise bei Temperaturen von mindestens 190°C in Form einer Feststoffpolykondensation polykondensiert werden. Weitere Herstellverfahren sind die Polykondensation von Ammoniumfumarat oder Ammoniummaleinat bei Temperaturen oberhalb von 120°C, die Polykondensation von Maleinsäureamid oder dem Ammoniumsalz von Maleinsäureamid bei Temperaturen oberhalb von 140°C in Substanz oder in Abmischung mit Polyalkylenglykolen oder die Polykondensation von Asparaginsäure mit Phosphorsäure oder anderen Säuren bei Temperaturen oberhalb 140°C. Als andere Säuren kommen beispielsweise Alkylbenzolsulfonsäure, Benzolsulfonsäure, Schwefelsäure, Ammoniumhydrogensulfat, Kaliumhydrogensulfat, Natriumhydrogensulfat, Mischungen aus Kalium- und Natriumhydrogensulfat, Salzsäure, phosphorige Säure und unterphosphorige Säure in Betracht. Die Molgewichte der Polykondensate der Asparaginsäure können beliebig sein. Die Molgewichte M_{w} betragen vorzugsweise 800 bis 300.000.

Für das erfindungsgemäße Verfahren kommen als Basen Alkalimetall- und/oder Erdalkalimetallbasen in Betracht. Hierunter sollen die Hydroxyde, Oxide, Carbonate oder Hydrogencarbonate von Alkalimetallen oder Erdalkalimetallen verstanden werden. Beispiele hierfür sind Natriumhydroxid, Kaliumhydroxid, Natriumcarbonat, Kaliumcarbonat, Natriumhydrogencarbonat, Kaliumhydrogencarbonat, Magnesiumoxid, Magnesiumhydroxid, Calciumoxid, Calciumhydroxid, Bariumoxid und Bariumhydroxid. Vorzugsweise verwendet man als Basen Natronlauge oder Soda. Die Basen können in Form der Feststoffe von wäßrigen Lösungen in Wasser oder Aufschlämmungen in Wasser bei dem erfindungsgemäßen Verfahren eingesetzt werden.

Die Basen werden in einer solchen Menge eingesetzt, daß man pro Mol der in den Polykondensaten enthaltenen von Asparaginsäure abgeleiteten Einheiten, wie Asparaginsäureimid-, Asparaginsäure- und Asparaginsäureamideinheiten, mehr als 1 Äquivalent einer Alkalimetall- und/oder einer Erdalkalimetallbase verwendet. Wenn man Polyaspartimid oder Polyasparaginsäure in Wasser vorlegt und mit bis zu 1,0 mol Alkali oder einem Moläquivalent einer Erdalkalimetallbase hydrolysiert oder wenn man Polyaspartimid oder Polyasparaginsäure gleichzeitig mit bis zu 1 mol Alkalien in einem kontinuierlichen Mischer vereinigt, erfolgt die Hydrolyse der Asparaginsäureimideinheiten unter Bildung von α- und β-verknüpften Polyasparaginsäureeinheiten, die in der Alkaliform als wäßrige Lösung vorliegen. Dieser Sachverhalt kann für Polysuccinimid beispielsweise folgendermaßen schematisch dargestellt werden:

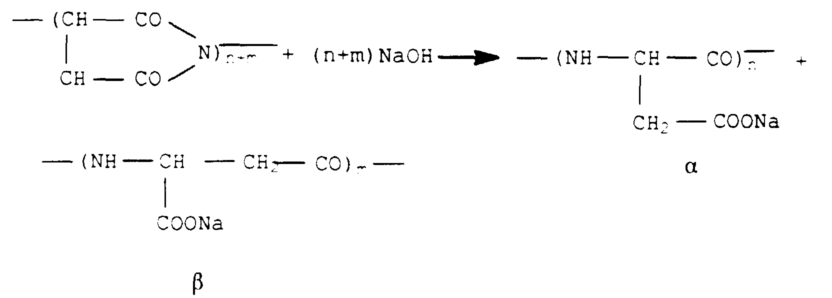

Wenn man mehr als 1 mol einer Alkalimetallbase oder ein Äquivalent einer Erdalkalimetallbase/mol Asparaginsäureimideinheiten in Polykondensaten von Asparaginsäure bei dem erfindungsgemäßen Verfahren einsetzt, erfolgt ein Molgewichtsabbau der Polykondensate, wobei Polypeptidhauptketten hydrolytisch gespalten werden. Ein Molgewichtsabbau von Polykondensaten der Asparaginsäure tritt insbesondere dann ein, wenn man pro Mol der in den Polykondensaten enthaltenen von Asparaginsäure abgeleiteten Einheiten vorzugsweise 1,05-1,5 mol einer Alkalimetallbase oder entsprechende Mengen von Moläquivalenten einer Erdalkalimetallbase einsetzt. Bei dem Molgewichtsabbau entstehen niedrigmolekulare Salze von Polyasparaginsäuren. Bei einem teilweisen hydrolytischen Abbau der Polykondensate wird die Molmasse der Polykondensate beispielsweise um 5 bis 95 %, meistens um 10 bis 85 und vorzugsweise um 20 bis 70 % erniedrigt. Setzt man bei der Behandlung von Polyaspartimiden mehr als 1,5 mol Alkali, z.B. 1,55 bis 2,0 mol Alkali, bezogen auf 1 mol Asparaginsäureimideinheiten im Polykondensat ein, so nimmt der Anteil an Polyasparaginsäureeinheiten in den Polykondensaten ab und es entsteht zunehmend monomere Asparaginsäure, die in der Natriumsalzform vorliegt. Dieser Sachverhalt kann beispielsweise mit Hilfe des folgenden Formelschemas beschrieben werden:
(a) bei α-, α-verknüpften Polyasparaginsäureeinheiten: 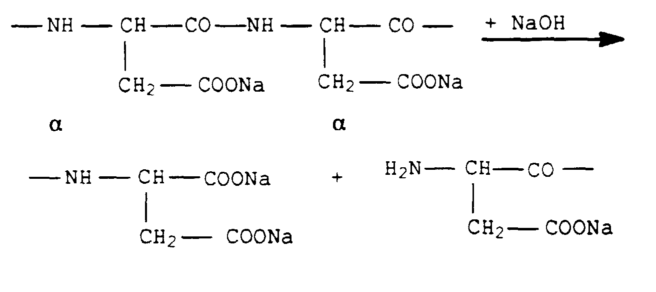
(b) bei β-, β- verknüpften Polyasparaginsäureeinheiten: 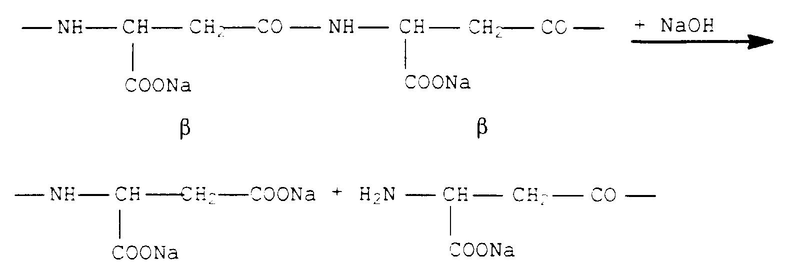
(c) bei α-, β- verknüpften Polyasparaginsäureeinheiten:

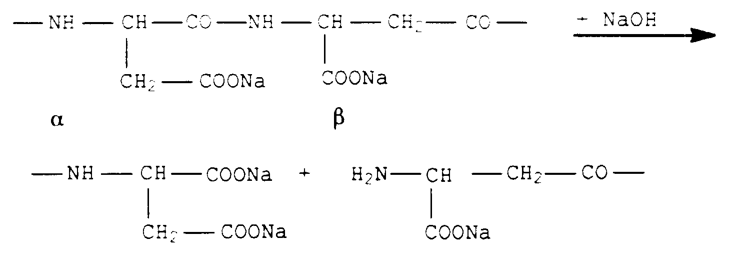

Erfindungsgemäß erfolgt die Hydrolyse von Polykondensaten der Asparaginsäure mit mehr als 1 Moläquivalent einer Alkalimetall- und/oder Erdalkalimetallbase, insbesondere mit 1,05 bis 1,5 Moläquivalenten einer Base, weil man in diesen Fällen neutralisierte Polyasparaginsäuren erhält, die gegenüber solchen Polyasparaginsäuresalzen, die mit einer unterstöchiometrischen Menge an Base hydrolysiert und neutralisiert wurden, eine verbesserte biologische Abbaubarkeit aufweisen. Bei der Polykondensation von Asparaginsäure entstehen in Abhängigkeit vom Polykondensationsverfahren polymere Nebenprodukte, die schlecht biologisch abbaubar sind. Durch Hydrolyse mit mehr als 1 mol Alkalimetallbase bzw. mehr als 1 mol Äquivalent einer Erdalkalimetallbase werden die polymeren Nebenprodukte in offenkettige Aspartylpeptide überführt, die dem biologischen Abbau besser zugänglich sind als die nicht hydrolysierten. Die in den Polykondensaten der Asparaginsäure in mehr oder weniger größerer Menge enthaltenen schlecht abbaubaren polymeren Nebenprodukte werden durch die aus dem Stand der Technik bekannte übliche alkalische Hydrolyse nicht geöffnet. In der nichtgeöffneten Form sind die Nebenproduktanteile biologisch nicht abbaubar. Bei Einsatz von mehr als 1 mol Äquivalent einer Alkalimetall- und/oder Erdalkalimetallbase/mol Asparaginsäureeinheiten in den Polykondensaten findet gleichzeitig auch eine Hydrolyse von Peptidbindungen in der Polykondensathauptkette statt. Dadurch tritt eine Erniedrigung des Molgewichts der Polyasparaginsäuren ein.

Die Verbesserung der biologischen Abbaubarkeit der Polyasparaginsäuren durch Hydrolyse von Polyaspartimiden mit mehr als 1 mol Äquivalent einer Alkalimetall- und/oder einer Erdalkalimetallbase/mol der in den Kondensaten enthaltenen Asparaginsäureimideinheiten kann nach allen bekannten Methoden gemessen werden. Prüfmethoden werden beispielsweise beschrieben von Wagner, Methoden zur Prüfung der biochemischen Abbaubarkeit chemischer Substanzen, VCH Verlagsanstalt Weinheim, 1988. Geeignete Methoden sind beispielsweise Zahn-Wellens-Test, DOC-Die-Away-Test, Sturm-Test und geschlossener Flaschentest.

Die Behandlung von Polykondensaten der Asparaginsäure mit Basen kann auf verschiedene Art und Weise durchgeführt werden. Dabei kann die erfindungsgemäß einzusetzende Menge an Alkalimetall- und/oder Erdalkalimetallbase innerhalb von 30 min bis 20 Stunden, vorzugsweise 1 bis 15 Stunden kontinuierlich oder in mehreren kleineren Portionen zugegeben werden. Die Polykondensate der Asparaginsäure können beispielsweise in Wasser aufgeschlämmt und bei Temperaturen unterhalb von 40°C mit 0 bis 70 % der erforderlichen Menge an Base versetzt werden, bis sich eine Lösung von Polyasparaginsäuresalzen ergibt. Diese Vorhydrolyse kann beispielsweise innerhalb von 30 min bis zu mehreren Stunden erfolgen. Die restliche Menge an Alkali, z.B. 70 bis 100 % der insgesamt erforderlichen Menge wird dann innerhalb von 30 min bis zu 20 Stunden in dem Temperaturbereich von 40 bis 140°C zudosiert. Vorzugsweise benutzt man zur Hydrolyse der Polykondensate von Asparaginsäure 10 bis 50 gew.-%ige wäßrige Lösung an Alkalimetallhydroxiden. Besonders bevorzugt ist eine Arbeitsweise, bei der man 1,05 bis 1,5 mol Natronlauge/mol der in den Kondensaten erhaltenen Asparaginsäureimid-, Asparaginsäure- und/oder Asparaginsäureamideinheiten einsetzt. Die Hydrolyse kann diskontinuierlich oder auch kontinuierlich dadurch ausgeführt werden, daß man beispielsweise gleichzeitig Natronlauge und Polyaspartimid in eine Polyasparaginsäure-Natriumsalzlösung einträgt. Die Temperaturen der Behandlung der Polykondensate der Asparaginsäure mit den Basen betragen 40 bis 140, vorzugsweise 50 bis 100°C. Bei oberhalb von 100°C liegenden Temperaturen wird die Behandlung der Polykondensate der Asparaginsäure in druckdicht geschlossenen Apparaturen, z.B. in einem Rührautoklaven durchgeführt. Die alkalische Hydrolyse verläuft besonders rasch in dem Temperaturbereich von 120-140°C.

Die nach dem erfindungsgemäßen Verfahren erhältlichen Salze der Polyasparaginsäure besitzen als 1%ige wäßrige Lösung in der Natriumform bei pH 7 und 25°C K-Werte nach Fikentscher von 7 bis 100, vorzugsweise 8 bis 80 entsprechend Molgewichten M_{W} von 156-150.000, vorzugsweise 500 bis 100.000. Die Molgewichte werden mit Hilfe der Gelpermeationschromatographie an geeichten Polyacrylsäurestandards geprüft.

Die Salze der Polyasparaginsäure und vorzugsweise die Alkalimetall- und Erdalkalimetallsalze der durch hydrolytische Spaltung von Peptidbindungen in Polysuccinimiden bzw. in Salzen von Polyasparaginsäuren erhältlichen Salze von abgebauten Polygasparaginsäuren werden als Zusatz zu phosphatfreien oder phosphatreduzierten Wascn- und Reinigungsmitteln verwendet. Phosphatreduzierte Waschmittel haben einen Phosphatgehalt, berechnet als Na-triphosphat, von höchstens 25 Gew.-%. Die abgebauten Polyasparaginsäuren und ihre Salze weisen gegenüber den nicht abgebauten Polyasparaginsäuresalzen eine überraschend höhere biologische Abbaubarkeit auf. Sie wirken in Textilwaschmitteln als Inkrustationsinhibitor. Die Salze von abgebauten Polyasparaginsäuren werden z.B. in Mengen von 1 bis 10 Gew.-% in Wasch- und Reinigungsmitteln, bezogen auf die Formulierungen eingesetzt. Bei der Behandlung der Polykondensate der Asparaginsäure mit mehr als 1 Moläquivalent einer Base beträgt der Molgewichtsabbau der Polykondensate beispielsweise 5 bis 95 %, bezogen auf die Molmasse der eingesetzten Polykondensate.

Die Waschmittel können pulverförmig sein oder auch in flüssiger Einstellung vorliegen. Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren.

Die Prozentangaben in den Beispielen sind Gew.-%. Die K-Werte wurden nach H. Fikentscher, Cellulose-Chemie, Band 13, 58-64 und 72-74 (1932) in wäßriger Lösung bei einer Temperatur von 25°C und einer Konzentration von 1 Gew.- bei pH 7 am Natriumsalz der Polyasparaginsäuren bestimmt.

### Beispiele

### Herstellung von Polykondensaten der Asparaginsäure

### Polyasparaginsäureimid 1

In einem 200 l fassenden Taumeltrockner werden 50 kg Asparaginsäure eingefüllt und unter Durchleiten eines Stickstoffstroms (500 l/h) innerhalb von 6 Stunden bei einer Temperatur des Wärmeüberträgeröls von 220°C polykondensiert, bis sich 95 % der theoretisch möglichen Menge an Wasser gebildet haben. Danach wird der Reaktor abgekühlt und das Polykondensat ohne weitere Reinigung zur Hydrolyse verwendet. Das Molgewicht M_{w} beträgt 6000.

### Polyasparaginsäureimid 2

Ein kontinuierlich arbeitender Kneter mit einem Fassungsvermögen von 2 l wird auf eine Temperatur von 250°C vorgeheizt. Aus einer Feststoffdosiereinheit werden dann 2 kg/h Maleinsäureamid gleichmäßig unter gleichzeitigem Durchleiten von Stickstoff in den Reaktor dosiert und das entstandene Wasser und kleine Mengen Ammoniak abdestilliert. Am Reaktorausgang tritt das Polyasparaginsäureimid als rötlich aufgeschäumtes Pulver aus. Die Herstellung des Polyasparaginsäureimids wird nach einer Polymerisationsdauer von 6 Stunden beendet. Das erhaltene Polykondensat wird ohne weitere Reinigung für Hydrolyseversuche eingesetzt. Das Molgewicht M_{w} beträgt 3000.

### Polyasparaginsäureimid 3

In einem 1000 l fassenden Reaktor, der mit einem Ankerrührer ausgestattet ist, werden 133,2 kg L-Asparaginsäure und 326,7 kg 75%ige Phosphorsäure eingefüllt und solange bei 100°C gerührt, bis sich die Asparaginsäure gelöst hat. Die dafür erforderliche Zeit beträgt etwa 3 bis 4 Stunden. Anschließend reduziert man den Druck im Reaktor auf 100 mbar und destilliert 92 l Wasser ab. Dann erhöht man die Temperatur auf 160°C und polykondensiert das Reaktionsgemisch 20 Stunden bei 50 mbar. Nach dieser Zeit haben sich 36 l Wasser gebildet. Die Reaktionsmischung wird dann in einem mit 500 l Wasser befüllten Reaktor abgelassen, wobei eine Suspension entsteht, die 2 Stunden gerührt wird. Man filtriert das Polykondensat ab und wäscht es solange mit Wasser, bis das Filtrat einen pH-Wert von 4 hat. Das Polykondensat wird feucht für die Hydrolyseversuche eingesetzt. Es hat einen Wassergehalt von 66,7 %. Das Molgewicht M_{w} beträgt 10 000.

### Beispiel 1 (Vergleich)

In einem 160 l fassenden Rührkessel werden 68 kg des Polyasparaginsäureimids 3 mit einem Wassergehalt von 66,7 % eingefüllt und mit 10 l Wasser versetzt, so daß ein rührbarer Brei entsteht. Dann dosiert man gleichmäßig innerhalb von 4 Stunden 17,8 kg 50 %ige wäßrige Natronlauge (94 % der für eine 100%-ige Neutralisation nötigen Menge) mittels einer Pumpe in den Reaktor. Die Temperatur der Hydrolyselösung wird dabei auf 80°C gehalten. Nach beendeter Zugabe wird das Reaktionsgemisch solange bei 80°C gerührt, bis sich eine klare Lösung gebildet hat. Der pH-Wert der wäßrigen Polymerlösung wird dann durch Zugabe geringer Mengen an Natronlauge auf 7,3 eingestellt. Der K-Wert der Polyasparaginsäure in Form des Natriumsalzes beträgt 24,1, was einem Molgewicht M_{w} von 5000 entspricht.

### Beispiel 2

In einem 500 l fassenden Rührkessel werden 68 kg des Polyasparaginsäureimids 3 mit einem Wassergehalt von 66,7 % und 240 l Wasser vorgelegt. Zu dieser Aufschlämmung dosiert man innerhalb von 2 Stunden bei einer Temperatur von max. 35°C 65 kg 25%ige wäßrige Natronlauge zu. Die Mischung wird danach 10 Stunden bei 20°C gerührt. Dann erhöht man die Temperatur auf 60°C. Nach 4 Stunden gibt man 43 kg 25%ige wäßrige Natronlauge innerhalb von 6 Stunden zu und rührt das Reaktionsgemisch 16 Stunden bei 60°C. Die insgesamt eingesetzten Mengen an Natronlauge beträgt 100,6 % der Theorie, d.h. bezogen auf Polyasparaginsäure. Die Lösung hat einen pH-Wert von 7,3 und einen Feststoffgehalt von 22 Gew.-%. Der K-Wert des Polykondensates beträgt 32,4, was einem Molgewicht M_{w} von 9000 entspricht.

### Beispiel 3 (Vergleich)

In einem 100 l fassenden Reaktor, der mit einem Ankerrührer ausgestattet ist, werden 34 kg Polyasparaginsäureimid 1 und 45 kg Wasser eingefüllt, auf eine Temperatur von 40°C erwärmt und innerhalb von 4 Stunden bei dieser Temperatur mit 24,5 kg 50%iger wäßriger Natronlauge (87 % d.Th.) versetzt. Nach Zugabe der Natronlauge wird das Reaktionsgemisch noch 10 Stunden zur Vervollständigung der Hydrolyse gerührt. Der pH-Wert der Lösung wird dann auf 7,7 eingestellt. Die Lösung hat einen Feststoffgehalt von 47 %, Der K-Wert des Natriumsalzes der Polyasparaginsäure beträgt 20,4, was einem Molgewicht M_{w} von 4000 entspricht.

### Beispiel 4 (Vergleich)

In einem 50 l fassenden Reaktor, der mit einem Ankerrührer versehen ist, werden 10 kg Polyasparaginsäureimid 2 und 14 kg Wasser vorgelegt, auf eine Temperatur von 40°C erhitzt und innerhalb von 4 Stunden gleichmäßig bei dieser Temperatur mit 6,4 kg einer 50%igen wäßrigen Natronlauge (78 % d.Th.) versetzt. Danach erhöht man die Temperatur auf 80°C und rührt die Reaktionsmischung 10 Stunden bei dieser Temperatur und kühlt sie danach ab. Der pH-Wert der Lösung wird dann auf 8 eingestellt. Die wäßrige Lösung hat einen Feststoffgehalt von 45 %. Der K-Wert des Natriumsalzes der Polyasparaginsäure beträgt 15,5, was einem Molgewicht M_{w} von 3000 entspricht.

### Beispiele 5 - 18

98 g (1 mol) der in Tabelle 1 angegebenen Polyasparaginsäureimide werden jeweils in 200 ml Wasser bei der in Tabelle 1 ebenfalls angegebenen Temperatur aufgeschlämmt und innerhalb von 60 min mit den in Tabelle 1 aufgeführten Mengen an 50%iger wäßriger Natronlauge versetzt. Die Hydrolyse wird danach jeweils für die in Tabelle 1 ebenfalls angegebene Zeit fortgesetzt und dann durch Zugabe von Salzsäure bis zu einem pH-Wert von 7 beendet. Die K-Werte und die Molgewichte M_{w} sind in Tabelle 1 angegeben.

**Tabelle 1**

| Bsp. | Polyasparaginsäureimid | NaOH [Mol] | Temp [°C] | Zeit [Stdn.] | K-Wert | Mw |
|---|---|---|---|---|---|---|
| 5 | 2 | 1,1 | 60 | 6 | 11,3 | 1500 |
| 6 | 2 | 1,2 | 60 | 6 | 9,7 | 800 |
| 7 | 2 | 1,5 | 60 | 6 | 6,7 | 500 |
| 8 | 2 | 2,0 | 60 | 6 | 5,6 | unter 400 |
| 9 | 1 | 1,1 | 100 | 4 | 15,7 | 2890 |
| 10 | 1 | 1,1 | 100 | 8 | 15,1 | 2870 |
| 11 | 1 | 1,1 | 100 | 16 | 15,3 | 2800 |
| 12 | 1 | 1,1 | 100 | 32 | 10,1 | 2690 |
| 13* | 3 | 1,0 | 100 | 5 | 28,9 | 8000 |
| 14 | 3 | 1,1 | 100 | 8 | 15,1 | 2780 |
| 15 | 3 | 1,1 | 100 | 5 | 14,8 | 2500 |
| 16 | 3 | 1,2 | 100 | 5 | 10,7 | 1500 |
| 17 | 3 | 1,5 | 100 | 5 | 8,5 | 1000 |
| 18 | 3 | 2,0 | 100 | 5 | 7,4 | 500 |

| | | | | | | |
|---|---|---|---|---|---|---|
| * Vergleich | | | | | | |

### Beispiele 19 - 24

Man schlämmt jeweils 98 g (1 mol) der in Tabelle 2 angegebenen Polyasparaginsäureimide in 120 ml Wasser auf, erwärmt die Suspension auf 60°C und fügt innerhalb von 60 min die in Tabelle 2 angegebenen Mengen an 50%iger wäßriger Natronlauge zu. Das Reaktionsgemisch wird dann jeweils 5 Stunden zum Rückflußsieden erhitzt und danach durch Zugabe von Salzsäure auf einen pH-Wert von 7 eingestellt. Die K-Werte der Natriumsalze der Polyasparaginsäuren sind in Tabelle 2 angegeben.

**Tabelle 2**

| Beispiel | Polyasparaginsäureimid | NaOH | K-Wert |
|---|---|---|---|
| 19* | 3 | 0,8 mol | 32,4 |
| 20* | 3 | 1,0 mol | 24,2 |
| 21 | 3 | 1,2 mol | 10,7 |
| 22* | 2 | 0,8 mol | 11,1 |
| 23* | 2 | 1,0 mol | 12,7 |
| 24 | 2 | 1,2 mol | 9,4 |

| | | | |
|---|---|---|---|
| * Vergleich | | | |

### Beispiele 25 - 28 (Vergleich)

98 g (1 mol) der in Tabelle 3 angegebenen Polyasparaginsäureimide werden jeweils in 200 ml Wasser bei einer Temperatur von 50°C aufgeschlämmt und innerhalb von 8 Stunden mit 25 %iger wäßriger Natronlauge in Portionen von 1 ml versetzt. Im Verlauf der Natronlaugezugabe löst sich das Polyasparaginsäureimid zu einer klaren Lösung auf.

**Tabelle 3**

| Beispiel | NaOH [Mol] | Polyasparaginsäureimid | K-Wert | M_{W} |
|---|---|---|---|---|
| 25 | 0,7 | 2 | 15 | 3000 |
| 26 | 1,0 | 2 | 13 | 1800 |
| 27 | 0,7 | 1 | 26 | 6000 |
| 28 | 0,7 | 3 | 32 | 10000 |

### Beispiel 29 (Vergleich)

In einem 1 l fassenden Becherglas werden 194 g Polyasparaginsäureimid 1 in 200 g Wasser bei einer Temperatur von 40°C aufgeschlämmt und insgesamt mit 58 g (100 % der theoretischen Menge) an festem Magnesiumhydroxid innerhalb von 2 Stunden in kleinen Portionen versetzt. Man rührt die Reaktionsmischung danach 3 Stunden bei 40°C, bis eine klare Lösung entstanden ist. Der pH-Wert der Lösung beträgt 7,5. Durch Verdünnen mit Wasser wird der Feststoffgehalt der Lösung auf 24 % eingestellt. Der K-Wert des Polykondensates beträgt 12,7, entsprechend einem Molgewicht M_{w} von 2000.

### Beispiel 30 (Vergleich)

In einem 1 l fassenden Becherglas werden bei einer Temperatur von 40°C 194 g Polyasparaginsäureimid 1 in 200 g Wasser aufgeschlämmt und innerhalb von 2 Stunden mit 24 g festem Calciumhydroxid (100 % der berechneten Menge) versetzt. Das Calciumsalz scheidet sich in Form eines Konzentrationsniederschlags als teigige Masse aus der Lösung aus. Eine Probe von ca. 1 g des Calciumsalzes wird der Reaktionsmischung entnommen und mit 30 ml Wasser versetzt. Dabei entsteht eine klare Lösung. Die hydrolysierte Mischung wird anschließend mit 1 l Ethanol versetzt und das ausgefallene Calciumsalz über eine Fritte abgesaugt. Nach dem Waschen mit 200 ml Ethanol wird das Calciumsalz zu einem Pulver im Trockenschrank bei einer Temperatur von 60°C getrocknet.

### Beispiel 31 (Vergleich)

In einem 1 l fassenden Becherglas werden 194 g Polyasparaginsäureimid 1 in 200 g Wasser bei einer Temperatur von 20°C aufgeschlämmt und innerhalb von 2 Stunden mit 22,4 g 50%iger Kalilauge (100 % der theoretischen Menge) bei einer Temperatur von 50°C versetzt. Die so erhältliche Lösung hat einen Feststoffgehalt von 44 %. Der K-Wert des Polykondensats beträgt 25, entsprechend einem Molgewicht M_{w} 5500.

Bestimmung der biologischen Abbaubarkeit der hydrolysierten Polyasparaginsäureimide.

Ein Teil der nach dem erfindungsgemäßen Verfahren hergestellten Natriumsalze von Polyasparaginsäuren wurde im Zahn-Wellens-Test gemäß OECD 302 B auf biologische Abbaubarkeit untersucht. Die Abnahme des gelösten organischen Kohlenstoffs (DOC-Abnahme) ist in Tabelle 4 angegeben.

**Tabelle 4**

| Ökolog. Prüfung Nr. | Polyasparaginsäure-Na-Salz hergestellt nach Beispiel | Abnahme des gelösten organ. Kohlenstoffes in der Untersuchungslösung im Zahn-Wellens-Test nach 28 Tagen [%] |
|---|---|---|
| 1 | 9 | 85 |
| 2* | 27 | 48 |
| 3 | 14 | 95 |
| 4* | 28 | 80 |
| 5 | 5 | 79 |
| 6* | 25 | 41 |

| | | |
|---|---|---|
| * Vergleich | | |

Wie aus den Ergebnissen der Tabelle 4 ersichtlich ist, wird die biologische Abbaubarkeit von Polyasparaginsäurenatriumsalzen in unerwarteter Weise erhöht, wenn man bei der Hydrclyse des Polyasparaginsäureimids mehr als 1 mol Natronlauge verwendet.

Ein Teil der nach dem erfindungsgemäßen Verfahren hergestellten Hydrolysate wurde im Die-away-Test (DOC-Die-Away-Test/Methode C.4-A) Anhang zur EG-Richtlinie 92/69/EWG vom 31. Juli 1992) untersucht. Dies ist ein Test auf leichte biologische Abbaubarkeit. Außerdem wurden Untersuchungen nach dem CO₂-Test und Zahn-Wellens-Test durchgeführt.

| 1. DOC-Die-Away-Test | | |
|---|---|---|
| Polyasparaginsäure-Na-Salz erhalten nach Beispiel | Abbaubarkeit nach | |
| | 10 Tagen | 28 Tagen |
| a* 19 | 50 % | 70 % |
| b* 20 | 42 % | 85 % |
| c 21 | >90 % | >90 % |
| d* 22 | 40 % | 50 % |
| e* 23 | 50 % | 63 % |
| f 24 | 68 % | 75 % |

| | | |
|---|---|---|
| * Vergleich | | |

| 2. CO₂-Test | | |
|---|---|---|
| Polyasparaginsäure-Na-Salz nach Beispiel | Abbaubarkeit nach | |
| | 10 Tagen | 28 Tagen |
| a* 19 | 32 % | 52 % |
| b* 20 | 22 % | 67 % |
| c 21 | 60 % | 90 % |
| d* 22 | 25 | 45 % |
| e* 23 | 32 | 52 % |
| f 24 | 50 | 70 % |

| | | |
|---|---|---|
| * Vergleich | | |

Wie aus den ökologischen Untersuchungen resultiert, steigt mit zunehmendem Hydrolysegrad die biologische Abbaubarkeit. Besonders gut abbaubar sind die Polyasparaginsäuren, die durch Hydrolysieren von Polyasparaginsäureimiden mit 1 mol und mehr Natronlauge pro Mol Polyasparaginsäureimid hergestellt werden.

| 3. Doc-Abnahme im Zahn-Wellen-Test | | |
|---|---|---|
| Polyasparaginsäure-Na-Salz nach Beispiel | Doc-Abnahme [%] im Zahn-Wellen-Test nach | |
| | 3 Tagen | 10 Tagen |
| 19* | 10 | 92 |
| 14 | 15 | 94 |
| 16 | 35 | 95 |
| 17 | 76 | 95 |
| 18 | 95 | 95 |
| 22* | 25 | 70 |
| 13* | 26 | 72 |
| 16 | 33 | 80 |
| 17 | 62 | 82 |
| 18 | 82 | 88 |
| 27* | 10 | 50 |
| 9 | 10 | 82 |

| | | |
|---|---|---|
| * Vergleich | | |

## Patentansprüche

1. Verfahren zur Herstellung von Salzen der Polyasparaginsäure durch Behandlung von Polykondensaten der Asparaginsäure in wäßrigem Medium mit Basen, dadurch gekennzeichnet, daß man mehr als 1 Äquivalent einer Alkalimetall- und/oder einer Erdalkalimetallbase pro Mol der in den Kondensaten enthaltenen Asparaginsäureimid-, Asparaginsäure- und/oder Asparaginsäureamideinheiten einsetzt und die Kondensate teilweise hydrolytisch abbaut, wobei man die Basen innerhalb von 30 Minuten bis 20 Stunden zu einer auf 40 bis 140°C erhitzten wäßrigen Aufschlämmung von Polykondensaten der Asparaginsäure zufügt und die Reaktionsmischung ggf. noch nachreagieren läßt.

2. Verfahren nach Anspruch 1, dadurch gekennzeichnet, daß man 1,05 bis 1,5 mol Natronlauge pro Mol der in den Kondensaten enthaltenen Asparaginsäureimid-, Asparaginsäure- und/oder Asparaginsäureamideinheiten einsetzt.

3. Verwendung von Alkalimetall- und/oder Erdalkalimetallsalzen von Polyasparaginsäuren, die durch Behandlung von Polykondensaten der Asparaginsäure im wäßrigen Medium mit mehr als 1 Äquivalent einer Alkalimetall- und/oder einer Erdalkalimetallbase pro Mol der in den Polykondensaten enthaltenen Asparaginsäureimid-, Asparaginsäure- und/oder Asparaginsäureamideinheiten unter Erniedrigung der Molmasse der Polykondensate erhältlich sind, als Zusatz zu Wasch- und Reinigungsmitteln.

## Claims

1. A process for preparing salts of polyaspartic acid by treating polycondensates of aspartic acid in aqueous medium with bases, wherein more than 1 equivalent of an alkali metal and/or alkaline earth metal base is employed per mole of aspartimide, aspartic acid and/or aspartamide units present in the condensates, and the condensates undergo partial hydrolytic degradation, the bases being added within from 30 minutes to 20 hours to an aqueous suspension of polycondensates of aspartic acid which has been heated to 40-140°C, and the reaction mixture being allowed to react further where appropriate.

2. A process as claimed in claim 1, wherein from 1.05 to 1.5 mol of sodium hydroxide solution are employed per mole of aspartimide, aspartic acid and/or aspartamide units present in the condensates.

3. The use of alkali metal and/or alkaline earth metal salts of polyaspartic acids obtainable by treating polycondensates of aspartic acid in aqueous medium with more than 1 equivalent of an alkali metal and/or alkaline earth metal base per mole of aspartimide, aspartic acid and/or aspartamide units present in the polycondensates, with the molecular weight of the polycondensates being reduced, as additive to detergents and cleaners.

## Revendications

1. Procédé de préparation de sels d'acide polyaspartique par traitement de polycondensats de l'acide aspartique en milieu aqueux avec des bases, caractérisé en ce qu'on met en réaction plus d'un équivalent d'une base de métal alcalin et/ou d'une base de métal alcalino-terreux par mole des unités aspartimide, acide aspartique et/ou aspartamide contenues dans les condensats et on dégrade les condensats partiellement par hydrolyse, en ajoutant les bases en 30 minutes à 20 heures à une suspension aqueuse chauffée à 40-140°C de polycondensats d'acide aspartique et on laisse éventuellement le mélange réactionnel encore poursuivre la réaction.

2. Procédé selon la revendication 1, caractérisé en ce qu'on utilise 0,05 à 1,5 mole de soude par mole des unités asparimide, acide aspartique et/ou aspartamide contenus dans les condensats.

3. Utilisation des sels de métal alcalin et/ou de métal alcalino-terreux d'acide polyaspartique qui ont été obtenus par traitement de polycondensats d'acide aspartique en milieu aqueux avec plus d'un équivalent d'une base de métal alcalin et/ou d'une base de métal alcalino-terreux par mole d'unités aspartimide, acide aspartique et/ou aspartamide contenues dans les polycondensats avec réduction de la masse molaire des polycondensats, comme additifs à des produits de lavage et de nettoyage.
